# EUROPÄISCHE PATENTSCHRIFT

(11) **EP 2 458 982 B1**
(45) Veröffentlichungstag und Bekanntmachung des Hinweises auf die Patenterteilung: **25.06.2014**
(21) Anmeldenummer: 10734127.3
(22) Anmeldetag: 20.07.2010
(51) Int. Cl.: A01N 25/12, A01P 21/00, A01N 37/42

(54) **GRANULAT ENTHALTEND EINEN CARBOXY-HALTIGEN WACHSTUMSREGULATOR UND EIN FESTES SÄUERUNGSMITTEL**
GRANULATE CONTAINING A CARBOXYLIC GROWTH REGULATOR AND A SOLID ACIDIFIER
GRANULÉS CONTENANT UN RÉGULATEUR DE CROISSANCE CARBOXYLÉ ET UN AGENT D'ACIDIFICATION SOLIDE

(30) Priorität: 30.07.2009 EP 09009866; 01.10.2009 EP 09171990
(43) Veröffentlichungstag der Anmeldung: 06.06.2012
(73) Patentinhaber: BASF SE, 67056 Ludwigshafen (DE)
(72) Erfinder: KOLB, Klaus, 67105 Schifferstadt (DE); DINIES, Frank, 76877 Offenbach (DE); RADEMACHER, Wilhelm, 67117 Limburgerhof (DE)
(86) Internationale Anmeldenummer: PCT/EP2010/060465
(87) Internationale Veröffentlichungsnummer: WO 2011/012494

(56) Entgegenhaltungen:
- WO-A2-2008/094558
- BASF Aktiengesellschaft: "Regalis - Herstellen von Spritzbrühen" 9. Februar 2005 (2005-02-09), XP007915118 Gefunden im Internet: URL:http://web.archive.org/web/20050209091 758/http://regalis.kreado.com/anwendung/sp ritzbrhen/ [gefunden am 2010-10-29]
- ERWIN HAAS ET AL: "Chemische Ausdünnung im Weinbau", OBSTBAU/WEINBAU,, 1 January 2009 (2009-01-01), pages 80-82, XP007918934,

## Beschreibung

Gegenstand der vorliegenden Erfindung ist ein Granulat umfassend Prohexadion-Calcium und ein festes Säuerungsmittel, wobei das Säuerungsmittel ein Hydrogensulfat oder ein Hydrogenphosphat ist. Weiterer Gegenstand ist ein Verfahren zur Herstellung des Granulats durch Extrusion oder Wirbelschichtgranulation. Die Erfindung betrifft auch eine Verwendung des Granulats zur Herstellung einer wässrigen Spritzbrühe indem das Granulat mit Wasser in Kontakt gebracht wird, sowie eine Verwendung des Granulats zur Regulierung des Wachstums von Pflanzen. Kombinationen bevorzugter Merkmale mit anderen bevorzugten Merkmalen werden von der vorliegenden Erfindung umfasst.

Carboxy-haltige Wachstumsregulatoren wie Prohexadionsalze (z.B. Prohexadion-Calcium) sind bekannte Wachstumsregulatoren und kommerziell in verschiedenen agrochemischen Formulierungen erhältlich. Üblicherweise wird die Spritzbrühe angesetzt, indem das Prohexadionsalz im Spritztank mit Wasser (z.B. Leitungswasser oder Brunnenwasser) versetzt und danach ein leicht saurer pH Wert durch Zugabe von Zitronensäure eingestellt wird.

Rademacher und Kober, Europ. J. Hort. Sci. 2003, 68(3), 101-107 (Efficient use of prohexadione-Ca in pome fruits) offenbaren eine wässrige Zusammensetzung enthaltend 0,25 Gew.% Prohexadion-Calcium und Zitronensäure oder Phosphorsäure.

Die anhängige europäische Patentanmeldung EP 08165281.0 vom 26.9.2008 offenbart die Verwendung einer Kombination von Acyclcyclohexandioncarbonsäuren und Acyclcyclohexandioncarbonsäureestern zur Verbesserung der Entwicklung von Gramineen. Zur Förderung der Aufnahme von Acyclcyclohexandioncarbonsäuren in Pflanzen sei eine Ansäuerung der Spritzbrühe günstig.

Stover et al., Proceedings 31st PGRSA (Plant Growth Regulation Society of America) Annual Meeting, 2004, Seite 86, offenbaren eine Spritzbrühe enthaltend 500 ppm Prohexadion-Calcium, die mit Zitronensäure auf pH 3,5 eingestellt wurde.

Lovatt und Salazar-Garcia, Proceedings 33rd PGRSA Annual Meeting, 2006, Seite 98-107, offenbaren eine Spritzbrühe enthaltend 125 mg/L Prohexadion-Calcium, welche mit Zitronensäure auf einen pH-Wert von 5,5 eingestellt wurde.

Petgen, Das deutsche Weinmagazin 2009, 4, 26-30 offenbart die Ansäuerung einer Spritzbrühe mit Zitronensäure (0,1 %ig) auf einen pH Wert von 4,0 bis 5,5. Der Zusatz von Zitronensäure verbessere die Löslichkeit in Wasser und bewirke eine schnellere Aufnahme des Wirkstoffs.

Nachteilig an den bekannten Formulierungen von Carboxy-haltigen Wachstumsregulatoren wie Prohexadionsalzen ist, dass der Landwirt die Spritzbrühe mit hohem Arbeits- und Zeitaufwand ansetzen muss. Er braucht extra pH-Wert Messvorrichtungen, extra Lagerplatz für Zitronensäure und er muss die als "Reizend" klassifizierte Zitronensäure handhaben. Das Ansetzen wird durch die aufwendige Herstellung fehleranfällig.

Aufgabe der vorliegenden Erfindung war es eine Formulierung von Prohexadion-Calcium und deren Herstellverfahren zu finden, die bereits ein Säuerungsmittel enthält. Die Formulierung sollte einfach für den Anwender zu handhaben sein, und sie sollte lagerstabil sein. Weitere Aufgabe war, dass die Formulierung hohe Mengen an Prohexadion-Calcium und/oder an Säuerungsmittel enthalten sollte. Zudem war es Aufgabe, dass aus der Formulierung durch Verdünnen auch mit hartem Wasser eine Lösung bzw. Suspension mit hoher biologische Wirksamkeit hergestellt werden kann. Die Herstellung der Formulierung sollte großtechnisch mit preiswerten und nichttoxischen Einsatzmaterialien umzusetzen sein.

Die Aufgabe wurde gelöst durch ein Granulat umfassend Prohexadion-Calcium und ein festes Säuerungsmittel, wobei das Säuerungsmittel ein Hydrogensulfat oder ein Hydrogenphosphat ist.

Das Granulat ist eine Zusammensetzung, die bei 20 °C fest ist. Die einzelnen Granulatkörner sind können von der Form her kugelartig sein, wobei Ecken, Kanten und/oder Vertiefungen möglich sind. Solche Formen entstehen typischerweise bei der Wirbelschichtgranulation. Die Granulatkörner können auch von zylindrischer Form sein, wie sie beispielsweise bei der Extrudierung entstehen.

Carboxy-haltigen Wachstumsregulatoren sind Wachstumsregulatoren, die mindestens eine Carboxy-gruppen enthalten. Die Carboxy-haltigen Wachstumsregulatoren können in Form der freien Säure (-CO₂H), oder als Carboxylat-Salz (-CO₂^{Θ}) vorliegen. Bevorzugt liegen die Carboxy-haltigen Wachstumsregulatoren als Carboxylat-Salz vor. Geeignete Carboxy-haltige Wachstumsregulator sind Wachstumsregulatoren aus den Klassen der Auxine, Ethyleninhibitoren, Gibberelline, und Wachtumsinhibitoren, die mindestens eine Carboxy-gruppen enthalten.

Geeignete Carboxlat-Salze sind Salze der Kationen der Alkalimetalle, vorzugsweise des Lithiums, Natriums und Kaliums, der Erdalkalimetalle, vorzugsweise des Calciums und Magnesiums, und der Übergangsmetalle, vorzugsweise des Mangans, Kupfers, Zinks und Eisens, weiterhin Ammonium (NH₄⁺) und substituiertes Ammonium, worin ein bis vier Wasserstoffatome durch organische Gruppen substituiert sein können. Bevorzugte Carboxylat-Salze sind insbesondere die Natrium-, Kalium-, Calcium-, und Ammoniumsalze.

Das Granulat enthält einen Wachstumsregulator der Formel (I), 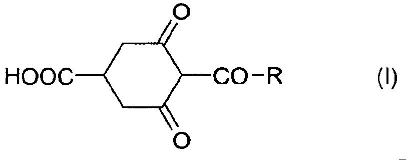 in Form eines Salzes R steht für Ethyl.

Die Verbindungen der Formel (I) können sowohl in der Trionform (Triketo-Form) I.a als auch in den tautomeren Keto-Enol-Formen I.b bzw. I.c vorliegen:

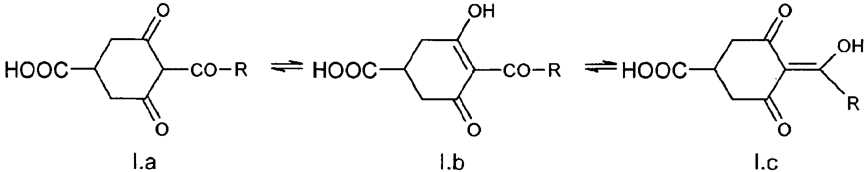

Bei den Salzen der Wachstumsregulatoren der Formel (I) kann es sich sowohl um die Salze der Mono- als auch der Dianionen dieser Verbindungen handeln kann. Die Monoanionen können sowohl als Carboxylatanionen I.d als auch als Enolatanionen I.e bzw. I.f vorliegen:

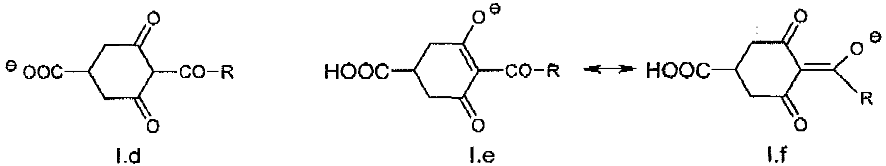

Bei dem Salzen des Wachstumregulators der Formel I handelt es sich um das Calciumsalz.

Das Granulat kann 0,01 bis 80 Gew.%, bevorzugt 0,1 bis 50 Gew.%, besonders bevorzugt 1 bis 25 Gew.% und insbesondere 3 bis 15 Gew.% Carboxy-haltige Wachstumsregulatoren enthalten.

Das Säuerungsmittel ist eine feste Chemikalie. Der Schmelzpunkt liegt meist bei mindestens 50 °C, bevorzugt bei mindestens 100 °C und insbesondere bei mindestens 150 °C. In einer weiteren bevorzugten Ausführungsform ist das Säuerungsmittel bei 20 °C in Wasser zu mindestens 50 g/l, besonders bevorzugt zu mindestens 150 g/l und insbesondere zu mindestens 300 g/l löslich.

Das feste Säuerungsmittel ist ein Hydrogensulfat oder ein Hydrogenphosphat.

Als Hydrogensulfat sind Salze enthaltend das Anion HSO₄ - geeignet, beispielsweise Alkalisalze oder Ammoniumsalze. Besonders bevorzugtes Hydrogensulfat ist Natriumhydrogensulfat oder Ammoniumhydrogensulfat (Schmelzpunk 120 °C, Wasserlöslichkeit 1000 g/l), insbesondere Natriumhydrogensulfat (Schmelzpunkt > 315 °C. Wasserlöslichkeit 1000 g/l).

Als Hydrogenphosphat sind Salze, wie Alkali- oder Erdalkalisalze enthaltend das Anion H₂PO₄- oder das Anion HPO₄²⁻ geeignet. Bevorzugt sind Alkali- oder Erdalkalisalze enthaltend das Anion H₂PO₄⁻(Dihydrogenphosphate). Besonders bevorzugtes Hydrogenphosphat ist Natriumdihydrogenphosphat, Kaliumdihydrogenphosphat oder Calciumdihydrogenphosphat.

Das Granulat kann 0,5 bis 50 Gew.%, bevorzugt 2 bis 30 Gew.% und insbesondere 5 bis 25 Gew.% Säuerungsmittel enthalten.

Das Granulat kann ein anorganisches Sulfat enthalten. Das anorganische Sulfat ist bevorzugt in Wasser zu mindestens 1 g/l, bevorzugt zu mindestens 100 g/l bei 20 °C löslich. Geeignete anorganische Sulfate sind Sulfate von Metallionen oder von quarternären Stickstoffverdindungen (wie Ammomium). Das anorganische Sulfat ist bevorzugt Ammoniumsulfat (Wasserlöslichkeit 754 g/l). Das Granulat kann 5 bis 75 Gew.%, bevorzugt 25 bis 70 und insbesondere 40 bis 65 Gew.% anorganische Sulfat enthalten.

Das Granulat kann ein Bindemittel enthalten. Bindemittel sind allgemein bekannt. Geeignete Beispiele sind Saccharide und synthetischische Polymere, bevorzugt Saccharide. Besonders bevorzugt ist das Bindemittel ein Disaccharid, Maltodextrin, Celluloseether, Polyvinylpyrrolidon, Polyvinylacetat oder Polyvinylalkohol. Speziell bevorzugt ist das Bindemittel ein Disaccharid oder ein Maltodextrin.

Beispiele für Bindemittel, die ein Saccharid enthalten, sind-Mono-, Di-, Oligo-, und Polysaccharide, sowie deren Mischungen. Geeignete Monosaccharide sind beispielsweise Sorbit, Mannit und Glucose. Geeignete Disaccharide sind beispielsweise Lactose und Saccharose. Geeignete Oligosaccharide sind beispielsweise Stärkehydrolysate mit einem DE (Dextrose Äquivalente) Wert von 2 bis 20 (sog. Maltodextrine). Geeignete Polysaccharide sind beispielsweise Stärke (Weizen-, Mais-, Kartoffel-, Reisstärke), Stärkederivate, Celluloseacetatphthalat, Hydroxylmethylcellulosephthalat, mikrokristalline Cellulose, Natrium-Carboxymethylcellulose, Methylcellulose, Celluloseether wie Hydroxypropylcellulose, Hydroxypropylmethylcellulose, Methylhydroxyethylcellulose, Methylhydroxypropylcellulose, Hydroxyethylcellulose. Bevorzugte Saccharide sind Disaccharide, Oligosaccharide und Celluloseether, und deren Mischungen. Besonders bevorzugt sind Stärkehydrolysate.

Beispiele für Bindemittel, die ein synthetisches Polymer enthalten, sind Polyolefine, wie Polyethylen, Polypropylen, Polybutylen und Polyisobutinylen; Vinylpolymere wie Polyvinylchlorid, Polyvinylpyrrolidon, Polyvinylinylcaprolactam, Polyvinylacetat, Polyvinylalkohol, Polystyrol, Polyacrylnitril, Polyacrylate, Polymethacrylate; Polyacetale wie Polyoxymethylen; Polyester mit zumindest teilweise aliphatischen Estergruppen wie Polyhydroxybuttersaeure, Polyhydroxyvaleriansaeure, Polybutylensuccinate, Polyalkylenterephthalate wie Polyalkylenadipateterephthalate wie Polybutylenadipatterephthalate; Polyesteramide; Polyetheramide; Polyamide; Polyesteramide; Polycaprolactame; Polyimide; Polyether; Polyetherketone; Polyurethane und Polycarbonate; und Copolymere aus Ethylen/Vinylacetat, Ethylen/(Meth)acrylaten, Styrol/Acrylnitril, Styrol/Butadien, Styrol/Butadien/Acrylnitril, Olefin/Maleinsaeureanhydrid. Bevorzugte synthetische Polymere sind Vinylpolymere, insbesondere Polyvinylpyrrolidon, Polyvinylacetat und Polyvinylalkohol.

Das Granulat kann 0,1 bis 30 Gew.%, bevorzugt 0,5 bis 15 Gew.% und insbesondere 2 bis 8 Gew.% Bindemittel enthalten.

Das Granulat kann ein nichtionisches oder anionisches Tensid enthalten. Das bedeutet es kann mindestens ein nichtionisches Tensid oder mindestens ein anionisches Tensid oder eine Mischung von mindestens einem nichtionischen Tensid und mindestens einem anionischen Tensid enthalten. Bevorzugt ist das nichtionische oder anionische Tensid ein Alkoxylat, ein Blockpolymer oder ein Sulfonat; besonders bevorzugt ein Alkoxylat, das mit Ethylenoxid alkoxiliert wurde, ein Blockpolymer umfassend Blöcke aus Polyethylenoxid und Polypropylenoxid, oder ein Alkali-, Erdalkali- oder Ammoniumsalz eines Sulfonats; und insbesondere ein Blockpolymere umfassend Blöcke aus Polyethylenoxid und Polypropylenoxid, oder ein Alkali-, Erdalkali- oder Ammoniumsalze von Sulfonaten von Naphthalinen, Alkylnaphthalinen, und von kondensierten Naphthalinen oder Alkylarylen

Geeignete nichtionische Tenside sind Alkoxylate, N-alkylierte Fettsäureamide, Aminoxide, Ester, Blockpolymere oder Zucker-basierte Tenside. Beispiele für Alkoxylate sind Verbindungen, wie Alkohole, Alkylphenole, Amine, Amide, Arylphenole, Fettsäuren oder Fettsäureester, die alkoxyliert wurden. Zur Alkoxylierung kann Ethylenoxid und/oder Propylenoxid eingesetzt werden, bevorzugt Ethylenoxid. Beispiele für N-alkylierte Fettsäureamide sind Fettsäureglucamide oder Fettsäurealkanolamide. Beispiele für Ester sind Fettsäureester, Glycerinester oder Monoglyceride. Beispiele für Zucker-basierte Tenside sind Sorbitane, ethoxilierte Sorbitane, Saccharose- und Glucoseester oder Alkylpolyglucoside. Geeignete Blockpolymere sind Blockpolymere vom A-B oder A-B-A Typ (molare Masse z.B. von 500 bis 5000 g/mol) umfassend Blöcke aus Polyethylenoxid und Polypropylenoxid oder vom A-B-C Typ umfassend Alkanol, Polyethylenoxid und Polypropylenoxid. Bevorzugte nichtionische Tenside sind Blockpolymere, bevorzugt Blockpolymere umfassend Blöcke aus Polyethylenoxid und Polypropylenoxid.

Geeignete anionische Tenside sind Alkali-, Erdalkali- oder Ammoniumsalze von Sulfonaten, Sulfaten, Phosphaten oder Carboxylaten. Beispiele für Sulfonate sind Alkylarylsulfonate (wie Lignin), Diphenylsulfonate, alpha-Olefinsulfonate, Sulfonate von Fettsäuren und Ölen, Sulfonate von ethoxylierten Alkylphenolen, Sulfonate von kondensierten (z.B. mit Formaldehyd) Naphthalinen oder Alkylarylen, Sulfonate von Dodecyl und Tridecylbenzolen, Sulfonate von Naphthalinen und Alkylnaphthalinen, Sulfosuccinate oder Sulfosuccinamate. Beispiele für Sulfate sind Sulfate von Fettsäuren und Ölen, von ethoxylierten Alkylphenolen, von Alkoholen, von ethoxylierten Alkoholen, oder von Fettsäureestern. Beispiele für Phosphate sind Phosphatester. Beispiele für Carboxylate sind Alkylcarboxylate und carboxylierte Alkohol- oder Alkylphenolethoxylate. Bevorzugte anionische Tenside sind Alkali-, Erdalkali- oder Ammoniumsalze von Sulfonaten, speziell Alkali-, Erdalkali- oder Ammoniumsalze von Sulfonaten von Naphthalinen, Alkylnaphthalinen, und von kondensierten Naphthalinen oder Alkylarylen.

Das Granulat kann 0,1 bis 35 Gew.%, bevorzugt 0,5 bis 25 Gew.% und insbesondere 3 bis 18 Gew.% nichtionisches oder anionisches Tensid enthalten, wobei alle nichtionischen und anionischen Tenside aufsummiert werden.

Das Granulat kann einen Komplexbildner enthalten. Unter Komplexbildner versteht man organische Verbindungen, die mit Calcium- und Magnesium-Ionen Komplexe in Wasser bilden. Geeignete Komplexbildner sind beispielweise EDTA (Ethylendiamintetraessigsaeure), NTA (Nitrilotriessigsaeure), EDDHA (Ethylendiamindi(orthohydroxyphenyl)essigsaeure), DTPA (Diethylentriaminpentaessigsaeure), HEDTA (Hydroxyethylendiamintriessigsaeure), Zitronensäure, Gluconsäure, Isoascorbinsäure, Natriumisoascorbat, Weinsäure, Iminodisuccinat Tetranatriumsalz, Triethanolamin, sowie die Alkali-, oder Erdalkalisalze der vorgenannten Säuren. Bevorzugte Komplexbildner sind EDTA und deren Alkalisalze. Das Granulat kann 0,001 bis 10 Gew.%, bevorzugt 0,01 bis 2 Gew.% und insbesondere 0,05 bis 0,5 Gew.% Komplexbildner enthalten.

Das Granulat kann einen festen Trägerstoff enthalten. Das heißt, es kann mindestens einen festen Trägerstoff enthalten. Beispielhaft seien als Trägerstoffe erwähnt: a) Anorganische Verbindungen: Mineralerden wie Kieselgele, Silikate, Talkum, Kaolin, Attaclay, Kalkstein, Kalk, Kreide, Löß, Ton, Dolomit, Diatomeenerde, Calcium- und Magnesiumsulfat, Magnesiumoxid, Attapulgite, Montmorillonite, Glimmer, Vermiculite, synthetische Kieselsäuren, amorphe Kieselsäuren und synthetische Calciumsilicate oder deren Mischungen; b) Organische Verbindungen: gemahlene Kunststoffe, Düngemittel wie Ammoniumphosphat, Ammoniumnitrat, Thioharnstoff und Harnstoff, pflanzliche Produkte wie Getreidemehle, Baumrinden-, Holz- und Nußschalenmehl, Cellulosepulver. Die festen Trägerstoffe können auch als Klumpungsmittel eingesetzt werden, wie Kieselsäuren. Daher sind Klumpungsmittel im Sinne der vorliegenden Erfindung feste Trägerstoffe.

Bevorzugt ist der Trägerstoff ein anorganischer Trägerstoff, besonders bevorzugt ein Silikat, wie gefällte Silica, Aluminium- und Calciumsilikate. Die mittlere Teilchengröße der Kieselsäure d50 (bestimmt über Laserbeugung) kann im Bereich von 0,1 bis 100 µm, bevorzugt von 0,5 bis 20 µm und insbesondere bei 1 bis 10 µm liegen. Die spezifische Oberfläche kann im Bereich von 1 bis 500 m²/g, bevorzugt bei 10 bis 100 m²/g liegen (bestimmt mittels Areameter analog zu ISO 5794-1, Annex D).

Das Granulat kann 0,1 bis 35 Gew.%, bevorzugt 0,5 bis 25 Gew.% und insbesondere 2 bis 17 Gew.% festen Trägerstoff enthalten.

Die Granulat kann weitere Formulierungshilfsmittel enthalten, wobei sich die Wahl der Hilfsmittel üblicherweise nach der konkreten Anwendungsform richtet. Beispiele für geeignete Formulierungshilfsmittel sind Lösungsmittel, oberflächenaktive Stoffe (wie Tenside, Schutzkolloide, Dispergiermittel, Netzmittel und Haftmittel), organische und anorganische Verdicker, Bakterizide, Frostschutzmittel, Entschäumer, ggf. Farbstoffe und Kleber (z. B. für Saatgutbehandlung).

Als oberflächenaktive Stoffe kommen, beispielsweise als Tensid, Dispergiermittel oder Netzmittel, die Alkali-, Erdalkali-, Ammoniumsalze von aromatischen Sulfonsäuren, z. B. von Lignin-(Borresperse^{®}-Typen, Borregaard, Norwegen), Phenol-, Naphthalin-(Morwet^{®}-Typen, Akzo Nobel, USA) und Dibutylnaphthalinsulfonsäure (Nekal^{®}-Typen, BASF, Deutschland), sowie von Fettsäuren, Alkyl- und Alkylarylsulfonaten, Alkyl-, Laurylether- und Fettalkoholsulfaten, sowie Salze sulfatierter Hexa-, Hepta- und Octadecanole sowie von Fettalkoholglykolethern, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen, Ligninsulfonate, Proteine, denaturierte Proteine, Polysaccharide (z.B. Methylcellulose), hydrophob modifizierte Stärken, Polyvinylalkohol (Mowiol^{®}-Typen, Clariant, Schweiz), Polycarboxylate (Sokalan^{®}-Typen, BASF, Deutschland), Polyalkoxylate, Polyvinylamin (Lupamin^{®}-Typen, BASF, Deutschland), Polyethylenimin (Lupasol^{®}Typen, BASF, Deutschland), Polyvinylpyrrolidon und deren Copolymere in Betracht. Bevorzugt werden Ligninsulfonate.

Beispiele für Adjuvantien sind organisch modifizierte Polysiloxane, wie BreakThru S 240^{®}; Alkoholalkoxylate, wie Atplus^{®}245, Atplus^{®}MBA 1303, Plurafac^{®}LF und Lutensol^{®} ON ; EO-PO-Blockpolymerisate, z. B. Pluronic^{®} RPE 2035 und Genapol^{®} B; Alkoholethoxylate, z. B. Lutensol^{®} XP 80; und Natriumdioctylsulfosuccinat, z. B. Leophen^{®} RA.

Beispiele für Verdicker (d. h. Verbindungen, die der Zusammensetzung ein modifiziertes Fließverhalten verleihen, d. h. hohe Viskosität im Ruhezustand und niedrige Viskosität im bewegten Zustand) sind Polysaccharide sowie organische und anorganische Schichtmineralien wie Xanthan Gum (Kelzan^{®}, CP Kelco), Rhodopol^{®} 23 (Rhodia) oder Veegum^{®} (R.T. Vanderbilt) oder Attaclay^{®} (Engelhard Corp.).

Beispiele für Entschäumer sind Silikonemulsionen (wie z. B. Silikon^{®} SRE, Wacker, Deutschland oder Rhodorsil^{®}, Rhodia, Frankreich), langkettige Alkohole, Fettsäuren, Salze von Fettsäuren, fluororganische Verbindungen und deren Gemische.

Das Granulat kann optional weitere, wie ein oder zwei, Pestizide enthalten. Bevorzugt enthält das Granulateinen weiteren Wachstumsregulator. Besonders bevorzugt enthält das Granulat als weiteren Wachstumsregulator Mepiquatchlorid. In einer weiteren Ausführungsform ist das Granulat frei von Pestiziden, die kein Wachstumsregulator sind. Vorzugsweise enthält das Granulat 1 bis 70 Gew.%, bevorzugt 15 bis 60 Gew.% und insbesondere 25 bis 40 Gew.% weiteren Wachstumsregulator, wie Mepiquatchlorid.

Der Begriff Pestizide bezeichnet mindestens einen Wirkstoff ausgewählt aus der Gruppe der Fungizide, Insektizide, Nematizide, Herbizide, Safener und/oder weitere Wachstumsregulatoren. Bevorzugte Pestizide sind Fungizide, Insektizide, Herbizide, und Wachstumsregulatoren. Besonders bevorzugte Pestizide sind Wachstumsregulatoren. Auch Mischungen von Pestiziden aus zwei oder mehr der vorgenannten Klassen können verwendet werden. Der Fachmann ist vertraut mit solchen Pestiziden, die beispielsweise in Pesticide Manual, 15th Ed. (2009), The British Crop Protection Council, London, gefunden werden können. Die folgende Liste von Pestiziden soll die Kombinationsmöglichkeiten erläutern, nicht aber einschränken:
A) Strobilurine:
   Azoxystrobin, Dimoxystrobin, Coumoxystrobin, Coumethoxystrobin, Enestroburin, Fluoxastrobin, Kresoxim-methyl, Metominostrobin, Orysastrobin, Picoxystrobin, Pyraclostrobin, Pyrametostrobin, Pyraoxystrobin, Pyribencarb, Trifloxystrobin, 2-[2-(2,5-Dimethylphenyl-oxymethyl)phenyl]-3-methoxy-acrylsäuremethylester, 2-(2-(3-(2,6-dichlorphenyl)-1-methyl-allylideneaminooxymethyl)-phenyl)-2-methoxyimino-N-methyl-acetamide;
B) Carbonsäureamide:
   - Carbonsäureanilide: Benalaxyl, Benalaxyl-M, Benodanil, Bixafen, Boscalid, Carboxin, Fenfuram, Fenhexamid, Flutolanil, Fluxapyroxad, Furametpyr, Isopyrazam, Isotianil, Kiralaxyl, Mepronil, Metalaxyl, Metalaxyl-M (Mefenoxam), Ofurace, Oxadixyl, Oxycarboxin, Penflufen, Penthiopyrad, Sedaxane, Tecloftalam, Thifluzamide, Tiadinil, 2-Amino-4-methyl-thiazol-5-carboxanilid, N-(4'-Trifluormethylthiobiphenyl-2-yl)-3-difluormethyl-1-methyl-1 H-pyrazol-4-carboxamid, N-(2-(1,3,3-Trimethyl-butyl)-phenyl)-1,3-dimethyl-5-fluor-1 H-pyrazol-4-carboxamid;
   - Carbonsäuremorpholide: Dimethomorph, Flumorph, Pyrimorph;
   - Benzoesäureamide: Flumetover, Fluopicolide, Fluopyram, Zoxamid;
   - Sonstige Carbonsäureamide: Carpropamid, Diclocymet, Mandipropamid, Oxytetracyclin, Silthiofam, N-(6-methoxy-pyridin-3-yl)cyclopropancarbonsäureamid;
C) Azole:
   - Triazole: Azaconazol, Bitertanol, Bromuconazol, Cyproconazol, Difenoconazol, Diniconazol, Diniconazol-M, Epoxiconazol, Fenbuconazol, Fluquinconazol, Flusilazol, Flutriafol, Hexaconazol, Imibenconazol, Ipconazol, Metconazol, Myclobutanil, Oxpoconazol, Paclobutrazol, Penconazol, Propiconazol, Prothioconazol, Simeconazol, Tebuconazol, Tetraconazol, Triadimefon, Triadimenol, Triticonazol, Uniconazol;
   - Imidazole: Cyazofamid, Imazalil, Imazalilsulfat, Pefurazoat, Prochloraz, Triflumizol;
   - Benzimidazole: Benomyl, Carbendazim, Fuberidazole, Thiabendazol;
   - Sonstige: Ethaboxam, Etridiazol, Hymexazol, 2-(4-Chlor-phenyl)-N-[4-(3,4-dimethoxy-phenyl)-isoxazol-5-yl]-2-prop-2-inyloxy-acetamid;
D) Stickstoffhaltige Heterocyclylverbindungen
   - Pyridine: Fluazinam, Pyrifenox, 3-[5-(4-Chlor-phenyl)-2,3-dimethyl-isoxazolidin-3-yl]-pyridin, 3-[5-(4-Methyl-phenyl)-2,3-dimethyl-isoxazolidin-3-yl]-pyridin;
   - Pyrimidine: Bupirimat, Cyprodinil, Diflumetorim, Fenarimol, Ferimzone, Mepanipyrim, Nitrapyrin, Nuarimol, Pyrimethanil;
   - Piperazine: Triforine;
   - Pyrrole: Fludioxonil, Fenpiclonil;
   - Morpholine: Aldimorph, Dodemorph, Dodemorphacetat, Fenpropimorph, Tridemorph;
   - Piperidine: Fenpropidin;
   - Dicarboximide: Fluorimid, Iprodione, Procymidone, Vinclozolin;
   - nichtaromatische 5-Ring-Heterocyclen: Famoxadon, Fenamidon, Flutianil, Octhilinon, Probenazol, 5-Amino-2-isopropyl-3-oxo-4-ortho-tolyl-2,3-dihydropyrazol-1-thiocarbonsäureS-allylester;
   - sonstige: Acibenzolar-S-methyl, Amisulbrom, Anilazin, Blasticidin-S, Captafol, Captan, Chinomethionat, Dazomet, Debacarb, Diclomezine, Difenzoquat, Difenzoquatmethylsulfat, Fenoxanil, Folpet, Oxolinsäure, Piperalin, Proquinazid, Pyroquilon, Quinoxyfen, Triazoxid, Tricyclazol, 2-Butoxy-6-jod-3-propyl-chromen-4-on, 5-Chlor-1-(4,6-dimethoxy-pyrimidin-2-yl)-2-methyl-1 H-benzoimidazol, 5-Chlor-7-(4-methyl-piperidin-1-yl)-6-(2,4,6-trifluor-phenyl)-[1,2,4]triazolo[1,5-a]pyrimidin, 5-Ethyl-6-octyl-[1,2,4]triazolo[1,5-a]pyrimidin-7-ylamin;
E) Carbamate und Dithiocarbamate
   - Thio- und Dithiocarbamate: Ferbam, Mancozeb, Maneb, Metam, Methasulphocarb, Metiram, Propineb, Thiram, Zineb, Ziram;
   - Carbamate: Diethofencarb, Benthiavalicarb, Iprovalicarb, Propamocarb, Propamocarb-hydrochlorid, Valiphenal, N-(1-(1-(4-Cyanophenyl)ethansulfonyl)-but-2-yl)carbaminsäure-(4-fluorphenyl)ester;
F) Sonstige Fungizide
   - Guanidine: Dodine, Dodine freie Base, Guazatin, Guazatinacetat, Iminoctadin, Iminoctadin-triacetat, Iminoctadin-tris(albesilat);
   - Antibiotika: Kasugamycin, Kasugamycinhydrochlorid-Hydrat, Polyoxine, Streptomycin, Validamycin A;
   - Nitrophenylderivate: Binapacryl, Dicloran, Dinobuton, Dinocap, Nitrothal-isopropyl, Tecnazen;
   - Organometallverbindungen: Fentin-Salze wie beispielsweise Fentin-acetat, Fentinchlorid, Fentin-hydroxid;
   - Schwefelhaltige Heterocyclylverbindungen: Dithianon, Isoprothiolane;
   - Organophosphorverbindungen: Edifenphos, Fosetyl, Fosetyl-Aluminium, Iprobenfos, Phosphorige Säure und ihre Salze, Pyrazophos, Tolclofos-methyl;
   - Organochlorverbindungen: Chlorthalonil, Dichlofluanid, Dichlorphen, Flusulfamide, Hexachlorbenzol, Pencycuron, Pentachlorphenol und dessen Salze, Phthalid, Quintozen, Thiophanat-Methyl, Tolylfluanid, N-(4-Chlor-2-nitro-phenyl)-N-ethyl-4-methyl-benzolsulfonamid;
   - Anorganische Wirkstoffe: Phosphorige Säure und ihre Salze, Bordeaux Brühe, Kupfersalze wie beispielsweise Kupferacetat, Kupferhydroxid, Kupferoxychlorid, basisches Kupfersulfat, Schwefel;
   - Biologische Pilzbekämpfungsmittel, Pflanzenstärkungsmittel: Ampelomyces quisqualis (z.B. das Produkt AQ 10^{®} der Fa. Intrachem Bio GmbH & Co. KG, Deutschland), Aspergillus flavus (z.B. das Produkt AFLAGUARD^{®} der Fa. Syngenta, Schweiz), Aureobasidium pullulans (z.B. das Produkt BOTECTOR^{®} der Fa. bio-ferm GmbH, Deutschland), Bacillus pumilus (z.B. Stamm NRRL Nr. B-30087 in SONATA^{®} und BALLAD^{®} Plus der Fa. AgraQuest Inc., USA), Bacillus subtilis (z.B. Stamm NRRL-Nr. B-21661 in RHAPSODY^{®}, SERENADE^{®} MAX und SERENADE^{®} ASO der Fa. AgraQuest Inc., USA), Bacillus subtilis var. amyloliquefaciens FZB24 (z.B. das Produkt TAEGRO^{®} der Fa. Novozyme Biologicals, Inc., USA), Candida oleophila I-82 (z.B. das Produkt ASPIRE^{®} der Fa. Ecogen Inc., USA), Candida saitoana (z.B. die Produkte BIOCURE^{®} (in Mischung mit Lysozym) und BIOCOAT^{®} der Firmen Micro Flo Company, USA (BASF SE) und Arysta), Chitosan (z.B. ARMOUR-ZEN der Fa. BotriZen Ltd., Neuseeland), Clonostachys rosea f. catenulata, auch genannt Gliocladium catenulatum (z.B. Stamm J1446: PRESTOP^{®} der Fa. Verdera, Finnland), Coniothyrium minitans (z.B. das Produkt CONTANS^{®} der Fa. Prophyta, Deutschland), Cryphonectria parasitica (z.B. das Produkt Endothia parasitica der Firma CNICM, Frankreich), Cryptococcus albidus (z.B. das Produkt YIELD PLUS^{®} der Fa. Anchor Bio-Technologies, South Africa), Fusarium oxysporum (z.B. die Produkte BIOFOX^{®} der Fa. S.I.A.P.A., Italien, und FUSACLEAN^{®} der Fa. Natural Plant Protection, Frankreich), Metschnikowia fructicola (z.B. das Produkt SHEMER^{®} der Fa. Agrogreen, Israel), Microdochium dimerum (z.B. das Produkt ANTIBOT^{®} der Fa. Agrauxine, Frankreich), Phlebiopsis gigantea (z.B. das Produkt ROTSOP^{®} der Fa. Verdera, Finnland), Pseudozyma flocculosa (z.B. das Produkt SPORODEX^{®} der Fa. Plant Products Co. Ltd., Kanada), Pythium oligandrum DV74 (z.B. das Produkt POLYVERSUM^{®} der Fa. Remeslo SSRO, Biopreparaty, Tschechische Republik), Reynoutria sachlinensis (z.B. das Produkt REGALIA^{®} der Firma Marrone Biolnnovations, USA), Talaromyces flavus V117b (z.B. das Produkt PROTUS^{®} der Fa. Prophyta, Deutschland), Trichoderma asperellum SKT-1 (z.B. das Produkt ECO-HOPE^{®} der Fa. Kumiai Chemical Industry Co., Ltd., Japan), T. atroviride LC52 (z.B. das Produkt SENTINEL^{®} der Fa. Agrimm Technologies Ltd, Neuseeland), T. harzianum T-22 (z.B. das Produkt PLANTSHIELD^{®} der Firma BioWorks Inc., USA), T. harzianum TH 35 (z.B. das Produkt ROOT PRO^{®} der Firma Mycontrol Ltd., Israel), T. harzianum T-39 (z.B. die Produkte TRICHODEX^{®} und TRICHODERMA 2000^{®} der Fa. Mycontrol Ltd., Israel und Makhteshim Ltd., Israel), T. harzianum und T. viride (z.B. das Produkt TRICHOPEL der Firma Agrimm Technologies Ltd, Neuseeland), T. harzianum ICC012 und T. viride ICC080 (z.B. das Produkt REMEDIER^{®} WP der Fa. Isagro Ricerca, Italien), T. polysporum und T. harzianum (z.B. das Produkt BINAB^{®} der Fa. BINAB Bio-Innovation AB, Schweden), T. stromaticum (z.B. das Produkt TRICOVAB^{®} von C.E.P.L.A.C., Brasilien), T. virens GL-21 (z.B. das Produkt SOILGARD^{®} der Firma Certis LLC, USA), T. viride (z.B. die Produkte TRIECO^{®} von Ecosense Labs. (India) Pvt. Ltd., Indien und BIO-CURE^{®} F der Fa. T. Stanes & Co. Ltd., Indien), T. viride TV1 (z.B. das Produkt T. viride TV1 der Firma Agribiotec srl, Italien), Ulocladium oudemansii HRU3 (z.B. das Produkt BOTRY-ZEN^{®} der Firmen Botry-Zen Ltd, Neuseeland);
   - Sonstige: Biphenyl, Bronopol, Cyflufenamid, Cymoxanil, Diphenylamin, Metrafenon, Pyriofenon, Mildiomycin, Oxin-Kupfer, Prohexadion-Calcium, Spiroxamin, Tolylfluanid, N-(Cyclopropylmethoxyimino-(6-difluormethoxy-2,3-difluor-phenyl)-methyl)-2-phenylacetamid, N'-(4-(4-Chlor-3-trifluormethyl-phenoxy)-2,5-dimethyl-phenyl)-N-ethyl-N-methylformamidin, N'-(4-(4-Fluor-3-trifluormethyl-phenoxy)-2,5-dimethylphenyl)-N-ethyl-N-methylformamidin, N'-(2-Methyl-5-trifluormethyl-4-(3-trimethylsilanyl-propoxy)-phenyl)-N-ethyl-N-methylformamidin, N'-(5-Difluormethyl-2-methyl-4-(3-trimethylsilanyl-propoxy)-phenyl)-N-ethyl-N-methylformamidin, 2-{1-[2-(5-Methyl-3-trifluormethyl-pyrazol-1-yl)-acetyl]-piperidin-4-yl}-thiazol-4-carboxylsäure-methyl-(1,2,3,4-tetrahydronaphthalen-1-yl)-amid, 2-{1-[2-(5-Methyl-3-trifluormethyl-pyrazol-1-yl)-acetyl]-piperidin-4-yl}-thiazol-4-carboxylsäure-methyl-(R)-1,2,3,4-tetrahydronaphthalen-1-yl-amid, Essigsäure-6-tert.-butyl-8-fluor-2,3-dimethyl-quinolin-4-yl-ester, Methoxy-essigsäure-6-tert.-butyl-8-fluor-2,3-dimethyl-quinolin-4-yl-ester, N-Methyl-2-{1-[2-(5-methyl-3-trifluormethyl-1H-pyrazol-1-yl)-acetyl]-piperidin-4-yl}-N-[(1R)-1,2,3,4-tetrahydronaphthalen-1-yl]-4-thiazolcarboxamid;
G) Wachstumsregler
   Abscisinsäure, Amidochlor, Ancymidol , 6-Benzylaminopurin, Brassinolid, Butralin, Chlormequat (Chlormequatchlorid), Cholinchlorid, Cyclanilid, Daminozid, Dikegulac, Dimethipin, 2,6-Dimethylpuridin, Ethephon, Flumetralin, Flurprimidol , Fluthiacet, Forchlorfenuron, Gibberellinsäure, Inabenfid, Indol-3-essigsäure, Maleinsäurehydrazid, Mefluidid, Mepiquat (Mepiquatchlorid), Metconazol, Naphthalenessigsäure, N-6-Benzyladenin, Paclobutrazol, Prohydrojasmon, Thidiazuron, Triapenthenol, Tributylphosphorotrithioat, 2,3,5-tri-Jodbenzoesäure, Trinexapac-ethyl und Uniconazol;
H) Herbizide
   - Acetamide: Acetochlor, Alachlor, Butachlor, Dimethachlor, Dimethenamid, Flufenacet, Mefenacet, Metolachlor, Metazachlor, Napropamid, Naproanilid, Pethoxamid, Pretilachlor, Propachlor, Thenylchlor;
   - Aminosäureanaloga: Bilanafos, Glyphosat, Glufosinat, Sulfosat;
   - Aryloxyphenoxypropionate: Clodinafop, Cyhalofop-butyl, Fenoxaprop, Fluazifop, Haloxyfop, Metamifop, Propaquizafop, Quizalofop, Quizalofop-P-tefuryl;
   - Bipyridyle: Diquat, Paraquat;
   - Carbamate und Thiocarbamate: Asulam, Butylate, Carbetamide, Desmedipham, Dimepiperat, Eptam (EPTC), Esprocarb, Molinate, Orbencarb, Phenmedipham, Prosulfocarb, Pyributicarb, Thiobencarb, Triallate;
   - Cyclohexanedione: Butroxydim, Clethodim, Cycloxydim, Profoxydim, Sethoxydim, Tepraloxydim, Tralkoxydim;
   - Dinitroaniline: Benfluralin, Ethalfluralin, Oryzalin, Pendimethalin, Prodiamine, Trifluralin;
   - Diphenylether: Acifluorfen, Aclonifen, Bifenox, Diclofop, Ethoxyfen, Fomesafen, Lactofen, Oxyfluorfen;
   - Hydroxybenzonitrile: Bromoxynil, Dichlobenil, loxynil;
   - Imidazolinone: Imazamethabenz, Imazamox, Imazapic, Imazapyr, Imazaquin, Imazethapyr;
   - Phenoxyessigsäuren: Clomeprop, 2,4-Dichlorphenoxyessigsäure (2,4-D), 2,4-DB, Dichlorprop, MCPA, MCPA-thioethyl, MCPB, Mecoprop;
   - Pyrazine: Chloridazon, Flufenpyr-ethyl, Fluthiacet, Norflurazon, Pyridat;
   - Pyridine: Aminopyralid, Clopyralid, Diflufenican, Dithiopyr, Fluridone, Fluroxypyr, Picloram, Picolinafen, Thiazopyr;
   - Sulfonylharnstoffe: Amidosulfuron, Azimsulfuron, Bensulfuron, Chlorimuron-Ethyl, Chlorsulfuron, Cinosulfuron, Cyclosulfamuron, Ethoxysulfuron, Flazasulfuron, Flucetosulfuron, Flupyrsulfuron, Foramsulfuron, Halosulfuron, Imazosulfuron, lodosulfuron, Mesosulfuron, Metsulfuron-methyl, Nicosulfuron, Oxasulfuron, Primisulfuron, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron, 1-((2-Chlor-6-propyl-imidazo[1,2-b]pyridazin-3-yl)sulfonyl)-3-(4,6-dimethoxy-pyrimidin-2-yl)harnstoff;
   - Triazine: Ametryn, Atrazin, Cyanazin, Dimethametryn, Ethiozin, Hexazinon, Metamitron, Metribuzin, Prometryn, Simazin, Terbuthylazin, Terbutryn, Triaziflam;
   - Harnstoffe: Chlorotoluron, Daimuron, Diuron, Fluometuron, Isoproturon, Linuron, Methabenzthiazuron,Tebuthiuron;
   - andere Hemmstoffe der Acetolactatsynthase: Bispyribac-Natrium, Cloransulam-Methyl, Diclosulam, Florasulam, Flucarbazone, Flumetsulam, Metosulam, Orthosulfamuron, Penoxsulam, Propoxycarbazone, Pyribambenz-Propyl, Pyribenzoxim, Pyriftalid, Pyriminobac-methyl, Pyrimisulfan, Pyrithiobac, Pyroxasulfon, Pyroxsulam;
   - Sonstige: Amicarbazon, Aminotriazol, Anilofos, Beflubutamid, Benazolin, Bencarbazon, Benfluresat, Benzofenap, Bentazon, Benzobicyclon, Bromacil, Bromobutid, Butafenacil, Butamifos, Cafenstrole, Carfentrazone, Cinidon-Ethlyl, Chlorthal, Cinmethylin, Clomazone, Cumyluron, Cyprosulfamid, Dicamba, Difenzoquat, Diflufenzopyr, Drechslera monoceras, Endothal, Ethofumesat, Etobenzanid, Fentrazamide, Flumiclorac-Pentyl, Flumioxazin, Flupoxam, Fluorochloridon, Flurtamon, Indanofan, Isoxaben, Isoxaflutol, Lenacil, Propanil, Propyzamid, Quinclorac, Quinmerac, Mesotrion, Methylarsensäure, Naptalam, Oxadiargyl, Oxadiazon, Oxaziclomefon, Pentoxazon, Pinoxaden, Pyraclonil, Pyraflufen-Ethyl, Pyrasulfotol, Pyrazoxyfen, Pyrazolynat, Quinoclamin, Saflufenacil, Sulcotrion, Sulfentrazon, Terbacil, Tefuryltrion, Tembotrion, Thiencarbazon, Topramezon, 4-Hydroxy-3-[2-(2-methoxy-ethoxymethyl)-6-trifluormethyl-pyridin-3-carbonyl]-bicyclo[3.2.1]oct-3-en-2-on, (3-[2-Chlor-4-fluor-5-(3-methyl-2,6-dioxo-4-trifluormethyl-3,6-dihydro-2H-pyrimidin-1-yl)-phenoxy]-pyridin-2-yloxy)-essigsäureethylester, 6-Amino-5-chlor-2-cyclopropylpyrimidin-4-carboxylsäuremethylester, 6-Chlor-3-(2-cyclopropyl-6-methyl-phenoxy)-pyridazin-4-ol, 4-Amino-3-chlor-6-(4-chlor-phenyl)-5-fluor-pyridin-2-carboxylsäure, 4-Amino-3-chlor-6-(4-chlor-2-fluor-3-methoxy-phenyl)-pyridin-2-carboxylsäuremethylester und 4-Amino-3-chlor-6-(4-chloro-3-dimethylamino-2-fluor-phenyl)-pyridin-2-carboxylsäuremethylester;
I) Insektizide
   - Organo(thio)phosphate: Acephat, Azamethiphos, Azinphos-methyl, Chlorpyrifos, Chlorpyrifos-Methyl, Chlorfenvinphos, Diazinon, Dichlorvos, Dicrotophos, Dimethoat, Disulfoton, Ethion, Fenitrothion, Fenthion, Isoxathion, Malathion, Methamidophos, Methidathion, Methyl-Parathion, Mevinphos, Monocrotophos, Oxydemeton-Methyl, Paraoxon, Parathion, Phenthoate, Phosalone, Phosmet, Phosphamidon, Phorate, Phoxim, Pirimiphos-Methyl, Profenofos, Prothiofos, Sulprophos, Tetrachlorvinphos, Terbufos, Triazophos, Trichlorfon;
   - Carbamate: Alanycarb, Aldicarb, Bendiocarb, Benfuracarb, Carbaryl, Carbofuran, Carbosulfan, Fenoxycarb, Furathiocarb, Methiocarb, Methomyl, Oxamyl, Pirimicarb, Propoxur, Thiodicarb, Triazamate;
   - Pyrethroide: Allethrin, Bifenthrin, Cyfluthrin, Cyhalothrin, Cyphenothrin, Cypermethrin, alpha-Cypermethrin, beta-Cypermethrin, zeta-Cypermethrin, Deltamethrin, Esfenvalerat, Etofenprox, Fenpropathrin, Fenvalerate, Imiprothrin, Lambda-Cyhalothrin, Permethrin, Prallethrin, Pyrethrin I und II, Resmethrin, Silafluofen, tau-Fluvalinat, Tefluthrin, Tetramethrin, Tralomethrin, Transfluthrin, Profluthrin, Dimefluthrin,
   - Hemmstoffe des Insektenwachstums: a) Chitinsynthese-Hemmstoffe: Benzoylharnstoffe: Chlorfluazuron, Cyramazin, Diflubenzuron, Flucycloxuron, Flufenoxuron, Hexaflumuron, Lufenuron, Novaluron, Teflubenzuron, Triflumuron; Buprofezin, Diofenolan, Hexythiazox, Etoxazol, Clofentazin; b) Ecdyson-Antagonisten: Halofenozid, Methoxyfenozid, Tebufenozid, Azadirachtin; c) Juvenoide: Pyriproxyfen, Methoprene, Fenoxycarb; d) Lipidbiosynthese-Hemmstoffe: Spirodiclofen, Spiromesifen, Spirotetramat;
   - Nikotinreceptor-Agonisten/Antagonisten: Clothianidin, Dinotefuran, Imidacloprid, Thiamethoxam, Nitenpyram, Acetamiprid, Thiacloprid, 1-(2-chloro-thiazol-5-yl-methyl)-2-nitrimino-3,5-dimethyl-[1,3,5]triazinan;
   - GABA-Antagonisten: Endosulfan, Ethiprol, Fipronil, Vaniliprol, Pyrafluprol, Pyriprol, 5-Amino-1-(2,6-dichlor-4-methyl-phenyl)-4-sulfinamoyl-1H-pyrazol-3-thiocarbonsäureamid;
   - Macrocyclische Lactone: Abamectin, Emamectin, Milbemectin, Lepimectin, Spinosad, Spinetoram;
   - Mitochondriale Elektronentransportketten-Inhibitor (METI) I Akarizide: Fenazaquin, Pyridaben, Tebufenpyrad, Tolfenpyrad, Flufenerim;
   - METI II und III Substanzen: Acequinocyl, Fluacyprim, Hydramethylnon;
   - Entkoppler: Chlorfenapyr;
   - Hemmstoffe der oxidativen Phosphorylierung: Cyhexatin, Diafenthiuron, Fenbutatinoxid, Propargit;
   - Hemmstoffe der Häutung der Insekten: Cryomazin;
   - Hemmstoffe von ,mixed function oxidases': Piperonylbutoxid;
   - Natriumkanalblocker: Indoxacarb, Metaflumizon;
   - Sonstige: Benclothiaz, Bifenazate, Cartap, Flonicamid, Pyridalyl, Pymetrozin, Schwefel, Thiocyclam, Flubendiamid, Chlorantraniliprol, Cyazypyr (HGW86); Cyenopyrafen, Flupyrazofos, Cyflumetofen, Amidoflumet, Imicyafos, Bistrifluron und Pyrifluquinazon.

Gut geeignete Beispiele für weitere Wachstumsregulatoren sind Abscisinsäure, Ancymidol, Aviglycin, 6-Benzylaminopurin, Brassinolide, Chlormequatchlorid, Cholinchlorid, Cyclanilid, Diflufenzopyr, Dikegulac, Ethephon, Flurprimidol , Forchlorfenuron, Gibberelline A₁, A₃, A₄, A₇, Inabenfide, Indol-3-essigsäure, Maleinsäurehydrazid, Mefluidid, Mepiquatchlorid, Metconazol, 1-Methylcyclopropen, Naphthalenessigsäure, Paclobutrazol, Prohydrojasmon, Tebuconazol, Thidiazuron, Triapenthenol, 2,3,5-Trijodbenzoesäure, Trinexapac-ethyl und Uniconazol. Bevorzugt ist der Wachstumsregulator Mepiquatchlorid, Chlormequatchlorid oder Ethephon, insbesondere Mepiquatchlorid. Das Granulat kann bis zu 70 Gew.%, bevorzugt bis zu 55 Gew.% und insbesondere bis zu 40 Gew.% weiteren Wachstumsregulator enthalten. In einer bevorzugten Ausführungsform enthält das Granulat 0,1 bis 70 Gew.%, bevorzugt 1 bis 50 und insbesondere 10 bis 40 Gew.% weiteren Wachstumsregulator.

In einer Ausführungsform kann das Granulat 0,1 bis 50 Gew.% Prohexadion-Calcium und 0,5 bis 45 Gew. % festes Säuerungsmittel enthalten. Bevorzugt enthält das Granulat 0,5 bis 30 Gew.% Prohexadion-Calcium und 2 bis 30 Gew.% festes Säuerungsmittel. Besonders bevorzugt enthält das Granulat 0,5 bis 30 Gew.% Prohexadion-Calcium, und 2 bis 30 Gew.% einer Carbonsäure mit zwei bis 20 Kohlenstoffatomen, ein Hydrogensulfat oder ein Hydrogenphosphat. Die vorgenannten Granulate können weitere Formulierungshilfsmittel, Komplexbildner, anorganisches Sulfat, Bindemittel, Tensid oder festen Trägerstoff enthalten, so dass die Gesamtsumme aller Bestandteile des Granulats 100 Gew.% ergibt.

In einer weiteren Ausführungsform kann das Granulat 0,1 bis 45 Gew.% Prohexadion-Calcium, 0,5 bis 35 Gew.% festes Säuerungsmittel, und 0,1 bis 20 Gew.% Bindemittel enthalten. Bevorzugt enthält das Granulat 0,5 bis 30 Gew.% Prohexadion-Calcium, 2 bis 30 Gew.% festes Säuerungsmittel und 0,5 bis 15 Gew.% Bindemittel. Besonders bevorzugt enthält das Granulat 0,5 bis 30 Gew.% Prohexadion-Calcium, 2 bis 30 Gew.% eine Carbonsäure mit zwei bis 20 Kohlenstoffatomen, ein Hydrogensulfat oder ein Hydrogenphosphat, und 0,5 bis 15 Gew.% Disaccharid oder Maltodextrin. Die vorgenannten Granulate können weitere Formulierungshilfsmittel, Komplexbildner, anorganisches Sulfat, Tensid oder festen Trägerstoff enthalten, so dass die Gesamtsumme aller Bestandteile des Granulats 100 Gew.% ergibt.

In einer weiteren Ausführungsform kann das Granulat mindestens 0,1 Gew.% Prohexadion-Calcium, mindestens 0,5 Gew.% festes Säuerungsmittel, mindestens 0,1 Gew.% Bindemittel und mindestens 5 Gew.% anorganisches Sulfat enthalten. Bevorzugt enthält das Granulat mindestens 0,1 Gew.% Prohexadion-Calcium, mindestens 2 Gew.% festes Säuerungsmittel, mindestens 1,0 Gew.% Bin demittel und mindestens 20 Gew.% anorganisches Sulfat enthalten. Die vorgenannten Granulate können weitere Formulierungshilfsmittel, Komplexbildner, Tensid oder festen Trägerstoff enthalten, so dass die Gesamtsumme aller Bestandteile des Granulats 100 Gew.% ergibt.

Die vorliegende Erfindung betrifft auch ein Verfahren zur Herstellung des erfindungsgemäßen Granulats durch Extrusion oder Wirbelschichtgranulation.

Das Verfahren durch Extrusion kann wie folgt durchgeführt werden: Im allgemeinen ist es üblich eine physikalische Mischung aus Prohexadion-Calcium, festem Säuerungsmittel, weiteren Pestiziden und Formulierungshilfsmitteln gemeinsam im freien Zulauf, z.B. über eine Differentialdosierwaage in einen Extruder zu dosieren und dort zu erwärmen. Im allgemeinen erfolgt die Vermischung der Komponenten in an sich bekannter Weise in Knetern oder Extrudern, vorzugsweise in Ein- oder Doppelschneckenextrudern in einem Temperaturbereich zwischen 50 und 200 °C, bevorzugt zwischen 20 und 150 °C. Der Extruder kann je nach Bedarf Misch-, Knet- und Rueckfuehrelemente enthalten. Gegebenenfalls können vorhandene Lösemittel und Restfeuchte mittels Entgasungsöffnungen oder Vakuumpumpen während der Extrusion abgezogen werden. Zudem können Komponenten in flüssiger als auch in fester Form durch seitliche Pumpen bzw. Foerderaggregate eingebracht werden. Die Form des Extrusionswerkzeuges richtet sich nach der gewünschten Form. Die Formgebung des austretenden Extrudats kann durch Stranggranulation der ganz oder teilweise abgekühlten Stränge, durch Heissabschlag des Extrudats am Extruderkopf mit einem Messerwalzengranulator, durch Unterwassergranulation direkt beim Austritt der Extrusion aus der Düse oder durch eine andere üblichen Methode realisiert werden. Die so erhaltenen festen Formen können z.B. durch Spritzguss zu Formkörpem weiterverarbeitet werden. In einer bevorzugten Ausführungsform erfolgt die Formgebung der austretenden Schmelze durch Stranggranulation.

Das Verfahren durch Wirbelschichtgranulation kann wie folgt durchgeführt werden: Die Wirbelschichtgranulation ist ein gut untersuchtes Verfahren zur Herstellung von Granulaten. Geeignete Anlagen und Betriebsweisen sind beispielsweise von Rosch und Probst, Verfahrenstechnik 1975 (9), 59-64 oder in EP 0 799 569 beschrieben worden. Ein Wirbelschichtgranulator umfasst üblicherweise eine Wirbelkammer mit einem Siebboden aus einem Lochblech. Dabei fließt beheizbares Wirbelgas mit einer bestimmten Eingangstemperatur und Fließgeschwindigkeit durch den Siebboden in die Wirbelkammer. Mittels einer Düse können Flüssigkeiten oder Dispersionen in die Wirbelkammer eingesprüht werden. Pulver können durch Einsaugen in den Granulator eingetragen werden. Bei dem Verfahren umfassend die Wirbelschichtgranulierung wird meist eine wässrige Zusammensetzung enthaltend einen Teil der Komponenten in eine Wirbelschichtkammer eingebracht. Das Einbringen erfolgt meist durch Versprühen der Zusammensetzung in ein Wirbelbett. Dabei wird die Zusammensetzung meist über eine oder mehrere Düsen, beispielsweise Ein-, Zwei- oder Dreistoffdüsen, versprüht. Bevorzugt wird die Dispersion über Zweistoffdüsen mit einem inerten Gas, wie Druckluft oder Stickstoff, bei einem Druck von 1,2 bis 5,0 bar und einer Bett-Temperatur von 15 bis 100 °C getrocknet. Üblicherweise ist die Düse in einem Abstand vom Siebboden angebracht, welcher dem 1,5- bis 10-fachen, insbesondere dem 2- bis 8-fachen, der Schichthöhe der ruhenden Wirbelbettfüllung entspricht. Ist die Düse zu nahe über der Wirbelschicht oder taucht die Düse in die Wirbelschicht ein, so treten starke Verklumpungen auf und das Wirbelbett bricht zusammen. Ist der Abstand der Düse zum Wirbelbett zu groß, so haben die fein verdüsten Partikel Zeit zum Antrocknen, so dass man im Allgemeinen ein Pulver und kein Granulat, zumindest aber ein Produkt mit einem hohen Staubanteil erhält. Das erfindungsgemäße Verfahren kann kontinuierlich oder batchweise durchgeführt werden, bevorzugt batchweise. Üblicherweise fließt beheizbares Wirbelgas, wie Luft, durch den Siebboden in die Wirbelschichtkammer. Die Eingangstemperatur des Wirbelgases beträgt meist von 50 bis 220 °C, bevorzugt von 70 bis 150 °C und insbesondere von 90 bis 120 °C. In einer weiteren Ausführungsform liegt die Eingangstemperatur unter 130 °C, bevorzugt unter 120 °C, insbesondere unter 115 °C. Die Wirbelgasmenge pro Quadratmeter Anströmfläche des Wirbelbodens kann von 3.000 bis 20.000 m³/h, bevorzugt von 6.000 bis 18.000 m³/h und insbesondere 9.000 bis 14.000 m³/h betragen. Es kann mit einer Wirbelbettfüllung von 50 bis 2000 kg/m² Fläche des Anström bodens, vorzugsweise 100 bis 1000 kg/m² gearbeitet werden. Mit Wirbelbettfüllung ist bei kontinuierlicher Verfahrensführung der "hold up" und beim Batch-Verfahren die Batchgröße d.h. die Füllmenge bei Granulationsende gemeint. Die mit dem Abgas aus dem Wirbelbett entweichenden Feingutanteile werden in üblicher Weise abgeschieden. Sie können als Keime für die Granulatbildung in das Wirbelbett zurückgeführt werden. Dabei ist sowohl eine interne als auch eine externe Feingutrückführung möglich. Für die Abscheidung der Feingutanteile und deren Rückführung können alle üblicherweise für derartige Zwecke eingesetzten Apparate verwendet werden. Das fertige Granulat wird über eine oder mehrere geeignete Vorrichtungen ausgetragen. Hierfür kommen alle üblichen Vorrichtungen in Betracht, beispielsweise Gegenstrom-Schwerkraft-Sichter, Zick-Zack-Sichter oder Austrag über eine Klappe.

Die vorliegende Erfindung betrifft ferner die Verwendung des erfindungsgemäßen Granulats zur Herstellung einer Spritzbrühe indem das Granulat mit Wasser in Kontakt gebracht wird. Die Spritzbrühe kann eine wässrige Lösung oder eine wässrige Suspension sein, je nach Löslichkeit und Konzentration der einzelnen Bestandteile des Granulats. Die Spritzbrühe ist üblicherweise die anwendungsgertige Zusammensetzung, die mit Applikationsgeräten nach dem Stand der Technik ausgebracht werden kann. Zur Herstellung der Spritzbrühe wird das Granulat üblicherweise mit einem Überschuss an Wasser vermischt. Dabei dispergiert oder löst sich das Granulat vorteilhafterweise schnell und vollständig in Wasser. Die wässrige Sprühsuspension kann bis zu 5,0 kg, bevorzugt 0,25 bis 2,5 kg Granulat in 100 bis 1000 I Wasser enthalten.

Zur Verdünnung kommen zusätzlich zu Wasser auch Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon in Betracht.

Insbesondere bei der Verwendung von sehr hartem und/oder alkalischem Wasser kann es vorteilhaft sein, der zum Versprühen angesetzten Lösung oder Suspension weitere Mengen an anorganischen Sulfaten (z.B. Ammoniumsulfat) und/oder Säuerungsmittel zur Erzielung eines pH-Wertes von 3,5 bis 6,5, bevorzugt von 4,0 bis 5,5, zuzusetzen. So kann der Zusatz von 0,01 bis 2 Gew.%, bevorzugt 0,1 bis 0,5 Gew.% anorganisches Sulfat hilfreich sein.

Die Spritzbrühe wird üblicherweise durch Versprühen oder Vernebeln angewendet. Als Tankmix können Öle verschiedenen Typs, Netzmittel, Adjuvants, Herbizide, Bakterizide, Fungizide oder Insektizide unmittelbar vor der Anwendung zugesetzt werden. Diese Mittel können zu der Spritzbrühe im Gewichtsverhältnis Tankmix:Granulat von 1:100 bis 100:1, bevorzugt 1:10 bis 10:1 zugemischt werden. Die Pestizidkonzentration im Tankmix kann in größeren Bereichen variiert werden. Im Allgemeinen liegen sie zwischen 0,0001 und 10%, vorzugsweise zwischen 0,01 und 1 %. Die Aufwandmengen liegen bei der Anwendung im Pflanzenschutz je nach Art des gewünschten Effektes zwischen 0,01 und 2,0 kg Wirkstoff pro ha.

Die vorliegende Erfindung betrifft ferner die Verwendung des erfindungsgemäßen Granulats zur Regulierung des Wachstums von Pflanzen. Es können praktisch alle Entwicklungsstadien einer Pflanze erfasst werden. Beispiele für Pflanzen sind Getreide, Rüben, Obst, Leguminosen, Soja, Raps, Senf, Oliven, Sonnenblumen, Hirse, Gerste, Hafer, Roggen, Kokosnuss, Kürbisgewächse, Baumwolle, Erdnüsse, Kartoffeln, Tomaten, Reis, Solanaceae, Bohnen, Zitrusfrüchte, Gemüsepflanzen, Mais, Zuckerrohr, Ölpalme, Tabak, Kaffee, Tee, Bananen, Avocado, Obstbäume (wie Pflaume, Pfirsich, Kirsche, Apfel, Birne, Mirabelle), Weinreben (wie Weißweinrebsorten und Rotweinrebsorten, z.B. Müller-Thurgau, Bacchus, Riesling, Scheurebe, Silvaner und bzw. Dornfelder, Lemberger, Tempranillo und Trollinger als Rotweinrebsorten), Hopfen, Gras, Beerenobst (z. B. Erdbeeren, Himbeeren, Johannisbeeren oder Stachelbeeren) Kautschukpflanzen, Zierpflanzen, Forstpflanzen, oder Rasengräser (wie Kentucky Bluegrass, einjähriges und mehrjähriges Ryegras, Tall Fescue, Rotschwingel, weisses Straußgras, einjähriges Bluegrass, Zoysia, Bermude, Centopide, St. Augustine). Als Pflanzen können auch solche verwendet werden, die durch Züchtung, einschließlich gentechnischer Methoden, gegen Insekten-, Viren- , Bakterien- oder Pilzbefall oder Herbizidapplikationen tolerant sind.

Bevorzugte Pflanzen sind Obstbäume (insbesondere Apfel, Birne und Süßkirsche), Gramineen (insbesondere Weizen, Triticale, Gerste, Hafer und Roggen, aber auch Mais, Reis, Zuckerrohr und Rasengräser).

Die folgenden Beispiele a) bis g) erläutern verschiedene erfindungsgemäße Verwendungen des erfindungsgemäßen Granulats:
a) So lässt sich beispielsweise das vegetative Wachstum der Pflanzen stark hemmen, was sich insbesondere in einer Reduzierung des Längenwachstums äußert. Die behandelten Pflanzen weisen demgemäß einen gedrungenen Wuchs auf; außerdem ist eine dunklere Blattfärbung zu beobachten. Als vorteilhaft für die Praxis erweist sich eine verminderte Intensität des Wachstums von Gräsern an Straßenrändern, Hecken, Kanalböschungen und auf Rasenflächen wie Park-, Sport- und Obstanlagen, Zierrasen und Flugplätzen, so dass der arbeits- und kostenaufwendige Rasenschnitt reduziert werden kann.
b) Von wirtschaftlichem Interesse ist auch die Erhöhung der Standfestigkeit von lageranfälligen Kulturen wie Getreide, Mais und Sonnenblumen. Die dabei verursachte Halmverkürzung und Halmverstärkung verringern oder beseitigen die Gefahr des "Lagerns" (des Umfallens) von Pflanzen unter ungünstigen Witterungsbedingungen vor der Ernte. Wichtig ist auch die Anwendung von Wachstumsregulatoren zur Hemmung des Längenwachstums und zur zeitlichen Veränderung des Reifeverlaufs bei Baumwolle. Damit wird ein effizienteres mechanisches Beernten dieser Kulturpflanze ermöglicht. Bei Obst- und anderen Bäumen lassen sich mit den Wachstumsregulatoren Schnittkosten einsparen. Außerdem kann die Alternanz von Obstbäumen durch Wachstumsregulatoren gebrochen werden. Durch Anwendung von Wachstumsregulatoren kann auch die seitliche Verzweigung der Pflanzen vermehrt werden. Daran besteht Interesse, wenn z. B. bei Getreidepflanzen eine intensivierte Bestockung erwünscht ist.
c) Mit Wachstumsregulatoren lässt sich beispielsweise bei Wintergetreide und Winterraps auch die Winterfestigkeit erheblich erhöhen. Dabei werden einerseits das Längenwachstum und die Entwicklung einer zu üppigen (und dadurch besonders frostanfälligen) Blatt- bzw. Pflanzenmasse gehemmt. Andererseits werden die jungen Pflanzen nach der Aussaat und vor dem Einsetzen der Winterfröste trotz günstiger Wachstumsbedingungen in der vegetativen Entwicklung zurückgehalten. Dadurch wird auch die Frostgefährdung solcher Pflanzen beseitigt, die zum vorzeitigen Abbau der Blühhemmung und zum Übergang in die generative Phase neigen. Bei Wintergetreide ist es vorteilhaft, wenn die Bestände durch Behandlung mit Wachstumsregulatoren im Herbst zwar gut bestockt werden, aber nicht zu üppig in den Winter hineingehen. Dadurch kann der erhöhten Frostempfindlichkeit und - wegen der relativ geringen Blatt- bzw. Pflanzenmasse - dem Befall mit verschiedenen Krankheiten (z. B. Pilzkrankheit) vorgebeugt werden. Die Hemmung des vegetativen Wachstums ermöglicht außerdem bei vielen Kulturpflanzen eine dichtere Bepflanzung des Bodens, so dass ein Mehrertrag bezogen auf die Bodenfläche erzielt werden kann.
d) Mit Hilfe von Wachstumsregulatoren lassen sich die Mehrerträge sowohl an Pflanzenteilen als auch an Pflanzeninhaltsstoffen erzielen. So ist es beispielsweise auch möglich, das Wachstum größerer Mengen an Knospen, Blüten, Blättern, Früchten, Samenkörnern, Wurzeln und Knollen zu induzieren, den Gehalt an Zucker in Zuckerrüben, Zuckerrohr sowie Zitrusfrüchten zu erhöhen, den Proteingehalt in Getreide oder Soja zu steigern oder Gummibäume zum vermehrten Latexfluss zu stimulieren. Dabei können die Wirkstoffe Ertragssteigerungen durch Eingriffe in den pflanzlichen Stoffwechsel bzw. durch Förderung oder Hemmung des vegetativen und/ oder des generativen Wachstums verursachen. Mit Pflanzenwachstumsregulatoren lassen sich schließlich sowohl eine Verkürzung bzw. Verlängerung der Entwicklungsstadien als auch eine Beschleunigung bzw. Verzögerung der Reife der geernteten Pflanzenteile vor oder nach der Ernte erreichen.
e) Von wirtschaftlichem Interesse ist beispielsweise die Ernteerleichterung, die durch das zeitlich konzentrierte Abfallen oder Vermindern der Haftfestigkeit am Baum bei Zitrusfrüchten, Oliven oder bei anderen Arten und Sorten von Kern-, Stein- und Schalenobst ermöglicht wird. Derselbe Mechanismus, das heißt die Förderung der Ausbildung von Trenngewebe zwischen Frucht- bzw. Blatt- und Sprossteil der Pflanze ist auch für ein gut kontrolliertes Entblättern von Nutzpflanzen wie beispielsweise Baumwolle wesentlich.
f) Mit Wachstumsregulatoren kann weiterhin der Wasserverbrauch von Pflanzen reduziert werden. Dies ist besonders wichtig für landwirtschaftliche Nutzflächen, die unter einem hohen Kostenaufwand künstlich bewässert werden müssen, z. B. in ariden oder semiariden Gebieten. Durch den Einsatz von Wachstumsregulatoren lässt sich die Intensität der Bewässerung reduzieren und damit eine kostengünstigere Bewirtschaltung durchführen. Unter dem Einfluss von Wachstumsregulatoren kommt es zu einer besseren Ausnutzung des vorhandenen Wassers, weil u. a. die öffnungsweite der Stomata reduziert wird, eine dickere Epidermis und Cuticula ausgebildet werden, die Durchwurzelung des Bodens verbessert wird, die transpirierende Blattoberfläche reduziert wird, oder das Mikroklima im Kulturpflanzenbestand durch einen kompakteren Wuchs günstig beeinflusst wird.
g) Mit Wachstumsregulatoren kann auch durch Veränderungen an Stoffwechselvorgängen und/oder durch Veränderungen der cytologischen Struktur eine physiologische Resistenz gegen Pathogene und Schadinsekten erzielt werden.

Ein Vorteil der vorliegenden Erfindung ist, dass das Verfahren mit Standardapparaturen großtechnisch durchgeführt werden kann. Es erlaubt die Kombination von Prohexadion-Calcium, mit Säuerungsmitteln in einer einzigen Formulierung. Weiterhin kommen nichttoxische Einsatzmaterialien zur Verwendung. Die nach dem erfindungsgemäßen Verfahren hergestellten Granulate sind sehr lagerstabil und können hohe Mengen an Säuerungsmitteln enthalten. Beim Verdünnen mit Wasser bilden sich schnell Sprüh-Suspensionen, selbst bei Verdünnen mit hartem Wasser. Ein vorhergehendes Homogenisieren des Granulates ist vor dem Verdünnungsschritt nicht notwendig. Auch der Einsatz von modernen Einspülschleusen ist ohne ein vorhergehendes "Anmaischen" des Granulats möglich. Das Granulat ist bei Teilentnahmen aus dem Handelsgebinde einfach dosierbar, da frei fließfähig (Dry Flowable). Die Granulate haben eine hohe bioregulatorische Wirksamkeit. Anders als bisher vorliegende Formulierungen ergeben sich insbesondere folgende Vorteile:
- In der Regel kein Zumischen von Adjuvants (z.B. Ammoniumsulfat oder Säuerungsmittel) mehr erforderlich, was eine Arbeitserleichterung, Verbesserung der Sicherheit für den Anwender, und weniger potentielle Fehlerquellen beim Herstellen der Spritzbrühe bedeutet.
- Die Löslichkeit von Prohexadion-Ca, ist verbessert. Der Wirkstoff liegt nun unmittelbar nach Ansetzen der Sprühsuspension in seiner aktiven Form (als freie Säure) vor.
- In Anwesenheit eines Säuerungsmittels (leicht saurer pH der Suspension) liegt Prohexadion undissoziiert (apolar) vor und kann so beschleunigt von pflanzlichen Zellen aufgenommen werden. Dadurch ergibt sich, insbesondere bei ungünstigen Applikationsbedingungen (z.B. schnelles Antrocknen des Spritzbelags bei warm-trockener Witterung), eine erhöhte Wirkstoffeffizienz. Weiterhin wird die Regenfestigkeit erheblich schneller erreicht.

Folgende Beispiele sollen die Erfindung erläutern ohne sie einzuschränken.

### Beispiele

### Beispiel 1: Herstellung der Granulate

In einem Wirbelschichtgranulator (z.B. Glatt GmbH, Baureihe GPCG) wurde das Granulat A bis D in batch-Fahrweise wie folgt hergestellt: Zunächst wurde eine wässrige Wirkstoffmischung hergestellt aus Prohexadion-Calcium, Kaolin, Silikat (mittlere Teilchengröße d50 9 µm, spezif. Oberfläche 35 m²/g), Entschäumer (auf Siliconbasis), Saccharose. Maltodextrin. nichtionisches Tensid, anionisches Tensid, und optional Säuerungsmittel (Zitronensäure-Monohydrat, Oxalsäure, Natriumhydrogensulfat) und/oder EDTA-Na₄. Diese Wirkstoffmischung wurde dann mittels Nassmahlverfahren zu einer Wirkstoffsuspension verarbeitet, die in einer separaten Vorlage unter Rühren homogen gehalten wurde. Dann wurde abgesiebtes Ammoniumsulfat (Fraktion 300-1000 µm) als Wirbelbett in dem Wirbelschichtgranulator vorgelegt. Mit einer Zweistoff düse (Durchmesser 3,5 mm, Düsendruck 3 bar) wurde die Wirkstoffsuspension auf das Ammoniumsulfat im Wirbelbett aufgesprüht. Die Sprührate von 4 I/min (Sprühzeit 195 Min) und die Düsenposition waren so gewählt, dass keine Sekundäragglomeration eintrat. Die Wirbelgasmenge betrug etwa 12.000 m³/h mit einer Eingangstemperatur von 110 °C und einer Ausgangstemperatur von 50 °C. Die Wasserverdampfung lag bei 30-40 g/m³.
Nach dem vorstehenden Verfahren wurden Granulat A bis D mit der Zusammensetzung wie in Tabelle 1 hergestellt. Die Granulate waren lagerstabil und konnten leicht abgefüllt werden.

**Tabelle 1: Zusammensetzung der Granulate (alle Angaben in Gew.%)**

| | Vergleichsbeispiele | | Erfindungsgemäße Beispiele | |
|---|---|---|---|---|
| | Granulat A | Granulat B | Granulat C | Granulat D |
| Prohexadion-Calcium | 10 | 10 | 10 | 10 |
| Nichtionisches Tensid | 10 | 10 | 10 | 10 |
| Kaolin | 3 | 3 | 3 | 3 |
| Saccharose | 4 | 4 | 4 | 4 |
| Maltodextrin | 2 | 2 | 2 | 2 |
| Kieselgel | 8,8 | 8,8 | 8,8 | 8,8 |
| Anionisches Tensid | 3 | 3 | 3 | 3 |
| Entschäumer | 0,4 | 0,4 | 0,4 | 0,4 |
| Natriumhydrogensulfat | - | - | 10 | 20 |
| Oxalsäure | 10 | - | - | - |
| Zitronensäure-Monohydrat | - | 10.9 | - | - |
| EDTA-Na₄ | - | 0,1 | 0,1 | 0,1 |
| Ammoniumsufat | 48,8 | 47,8 | 48,7 | 38,7 |

### Beispiel 2: Chemische und physikalische Eigenschaften

### Lagerstabilität

Die Granulate A bis D wurden einem standardisierten Lagerungstest bei erhöhter Temperatur (FAO Standard CIPAC (Collaborative International Pesticides Analytical Council) MT46.3 "Accelerated storage procedure ") unterzogen und zwei Wochen bei 54 °C gelagert. Vor und nach diesen Schnelllagertests wurden die chemischen und physikalischen Eigenschaften getestet.
Physikalische Stabilität: (Dispergiertest nach CIPAC MT 174 "DISPERSIBILITY OF WATER DISPERSIBLE GRANULES"): Jeweils eine Probe von 2 g des Granulats A und B wurden vor und nach der Lagerung in 100 ml CIPAC Wasser D gegeben, vollständig dispergiert und 2 h stehen gelassen. Das sich in dieser Spritzbrühe bildende Sediment wurde mit < 0,05 ml abgelesen.
Weitere physikalische Ergebnisse sind in Tabelle 2 aufgeführt.

**Tabelle 2: Stabilitätstest von Granulat A vor / nach 14-tägiger Lagerung bei 54 °C (Daten jeweils vor / nach Lagerung).**

| Test | Granulat A⁸ | Granulat B⁸ | Granulat C | Granulat D |
|---|---|---|---|---|
| Gehalt Wirkstoff ¹ | 10,0 / 9,25 Gew.% | 10,8 / 9,5 Gew.% | 11,0 / 9,8 Gew.% | 9,9 / 9,03 Gew.% |
| Schwebefähigkeit 0,25 % ² | 100/100% | 100/100% | 100/100% | 100/100 % |
| pH-Wert ³ | 2,6/2,6 | 4,1/4,1 | 4,5/4,4 | 2,9/3,0 |
| Wassergehalt ⁴ | 0.5/1,3 Gew.% | 0,5/0,6 Gew.% | 0,5/0,6 Gew.% | 0,8/0,8 Gew.% |
| Dispergierbarkeit ⁵ | 0,05/0,3 ml | 0,05/0,05 mL | 0,05 / 0,05 mL | 0,05 / 0,15 mL |
| Verbackung ⁶ | Frei fließend | Frei fließend | Frei fließend | Frei fließend |
| Partikelgrößenverteilung D(50) ⁷ | 3,3 bzw. 1,8 µm / 3,5 bzw. 1,7 µm | 2,3 bzw. 2,5 µm / 2,8 bzw. 3,0 µm | 2,3 bzw. 2,8 µm / 3,5 bzw. 2,9 µm | 2,3 bzw. 2,4 µm / 4,5 bzw. 10,1 µm |
| Partikelgrößenverteilung D(90)⁷ | 63 bzw. 31 µm / 53 bzw. 14 µm | 7,3 bzw. 42 µm / 7,7 bzw. 45 µm | 6,3 bzw. 47 µm / 11 bzw. 36 µm | 8,1 bzw. 36 µm / 34,1 bzw. 58,8 |

| | | | | |
|---|---|---|---|---|
| 1) Prohexadion-quantifiziert mit HPLC. 2) bestimmt nach CIPAC MT 168 "DETERMINATION OF THE SUPENSION STABILITY OF WATER DISPERSIBLE GRANULES". 3) 1 Gew.% in CIPAC D Wasser, bestimmt nach CIPAC MT 75 "Determination of pH values". 4) bestimmt durch IR-Trocknung. 5) 2,0 % in CIPAC Wasser D, bestimmt durch CIPAC MT 174 "Dispersibility of water dispersible granules". 6) bestimmt durch CIPAC MT 172 "Flowability of water dispersible granules after heat test under pressure". 7) bestimmt mit Malvern Mastersizer nach 1 min rühren (erster Wert) bzw. nach Ultraschallbehandlung (zweiter Wert) 8) Vergleichsbeispiel | | | | |

## Patentansprüche

1. Granulat umfassend Prohexadion-Calcium und ein festes Säuerungsmittel, wobei das Säuerungsmittel ein Hydrogensulfat oder ein Hydrogenphosphat ist.

2. Granulat nach Anspruch 1, wobei das Granulat 0,5 bis 50 Gew.% Säuerungsmittel enthält.

3. Granulat nach Anspruch 1 oder 2, wobei das Granulat 5 bis 25 Gew.% Säuerungsmittel enthält.

4. Granulat nach einem der Ansprüche 1 bis 3, wobei das Granulat ein Bindemittel enthält.

5. Granulat nach Anspruch 4, wobei das Bindemittel ein Saccharid ist.

6. Granulat nach einem der Ansprüche 1 bis 5, wobei das Granulat ein nichtionisches oder anionisches Tensid enthält.

7. Granulat nach einem der Ansprüche 1 bis 6, wobei das Granulat ein anorganisches Sulfat enthält.

8. Granulat nach einem der Ansprüche 1 bis 7, wobei das Granulat einen Komplexbildner enthält.

9. Granulat nach einem der Ansprüche 1 bis 8, wobei das Granulat ein festen Trägerstoff enthält.

10. Granulat nach einem der Ansprüche 1 bis 9, wobei das Granulat einen weiteren Wachstumsregler enthält.

11. Granulat nach Anspruch 10, wobei der weitere Wachstumsregler Mepiquatchlorid ist.

12. Granulat nach Anspruch 11, wobei das Granulat 25 bis 40 Gew.% Mepiquatchlorid enthält.

13. Verfahren zur Herstellung des Granulats gemäß einem der Ansprüche 1 bis 12 durch Extrusion oder Wirbelschichtgranulation.

14. Verwendung des Granulats gemäß einem der Ansprüche 1 bis 12 zur Herstellung einer wässrigen Spritzbrühe indem das Granulat mit Wasser in Kontakt gebracht wird.

15. Verwendung des Granulats gemäß einem der Ansprüche 1 bis 12 zur Regulierung des Wachstums von Pflanzen.

## Claims

1. Granules comprising prohexadione-calcium and a solid acidifier, wherein the acidifier is a hydrogen sulfate or a hydrogen phosphate.

2. The granules according to claim 1, which comprise from 0.5 to 50% by weight of acidifier.

3. The granules according to claim 1 or 2, which comprise from 5 to 25% by weight of acidifier.

4. The granules according to any of claims 1 to 3, which comprise a binder.

5. The granules according to claim 4, wherein the binder is a saccharide.

6. The granules according to any of claims 1 to 5, which comprise a nonionic or anionic surfactant.

7. The granules according to any of claims 1 to 6, which comprise an inorganic sulfate.

8. The granules according to any of claims 1 to 7, which comprise a complexing agent.

9. The granules according to any of claims 1 to 8, which comprise a solid carrier.

10. The granules according to any of claims 1 to 9, which comprise a further growth regulator.

11. The granules according to claim 10, wherein the further growth regulator is mepiquat chloride.

12. The granules according to claim 11, which comprise from 25 to 40% by weight of mepiquat chloride.

13. A process for the preparation of the granules according to any of claims 1 to 12 by extrusion or fluidized-bed granulation.

14. The use of the granules according to any of claims 1 to 12 for the preparation of an aqueous spray mixture, by bringing the granules into contact with water.

15. The use of the granules according to any of claims 1 to 12 for regulating the growth of plants.

## Revendications

1. Granulat comprenant du prohexadione-calcium et un acidifiant solide, l'acidifiant étant un hydrogénosulfate ou un hydrogénophosphate.

2. Granulat selon la revendication 1, le granulat contenant 0,5 à 50% en poids d'acidifiant.

3. Granulat selon la revendication 1 ou 2, le granulat contenant 5 à 25% en poids d'acidifiant.

4. Granulat selon l'une quelconque des revendications 1 à 3, le granulat contenant un liant.

5. Granulat selon la revendication 4, le liant étant un saccharide.

6. Granulat selon l'une quelconque des revendications 1 à 5, le granulat contenant un agent tensioactif non ionique ou anionique.

7. Granulat selon l'une quelconque des revendications 1 à 6, le granulat contenant un sulfate inorganique.

8. Granulat selon l'une quelconque des revendications 1 à 7, le granulat contenant un complexant.

9. Granulat selon l'une quelconque des revendications 1 à 8, le granulat contenant un support solide.

10. Granulat selon l'une quelconque des revendications 1 à 9, le granulat contenant un autre régulateur de croissance.

11. Granulat selon la revendication 10, l'autre régulateur de croissance étant du mépiquat-chlorure.

12. Granulat selon la revendication 11, le granulat contenant 25 à 40% en poids de mépiquat-chlorure.

13. Procédé pour la préparation du granulat selon l'une quelconque des revendications 1 à 12 par extrusion ou granulation en couche tourbillonnante.

14. Utilisation du granulat selon l'une quelconque des revendications 1 à 12 pour la préparation d'un bouillon de pulvérisation aqueux en ce que le granulat est mis en contact avec de l'eau.

15. Utilisation du granulat selon l'une quelconque des revendications 1 à 12 pour la régulation de la croissance de plantes.
